## Europäisches Patentamt
## European Patent Office
## Office européen des brevets

(19)

(11) Veröffentlichungsnummer: **0 306 485**
**B1**

(12) **EUROPÄISCHE PATENTSCHRIFT**

(45) Veröffentlichungstag der Patentschrift: **04.07.90**

(51) Int. Cl.⁵: **G 01 B 11/02**

(21) Anmeldenummer: **87902394.3**

(22) Anmeldetag: **11.04.87**

(86) Internationale Anmeldenummer:
**PCT/DE87/00168**

(87) Internationale Veröffentlichungsnummer:
**WO 87/07008 19.11.87 Gazette 87/25**

(54) HANDWERKZEUGMASCHINE, VORZUGSWEISE BOHRMASCHINE.

(30) Priorität: **10.05.86 DE 3615875**

(43) Veröffentlichungstag der Anmeldung:
**15.03.89 Patentblatt 89/11**

(45) Bekanntmachung des Hinweises auf die
Patenterteilung:
**04.07.90 Patentblatt 90/27**

(84) Benannte Vertragsstaaten:
**CH DE FR GB IT LI**

(56) Entgegenhaltungen:
**EP-A-0 183 240**
**WO-A-84/03142**
**BE-A- 755 859**
**DE-A-2 838 968**
**DE-A-3 322 714**

**Patent Abstracts of Japan, Band 10, No.48 (P-431)(2105) 25 February 1986 & JP,A,60194301**

(73) Patentinhaber: **ROBERT BOSCH GMBH**
**Postfach 50**
**D-7000 Stuttgart 1 (DE)**

(72) Erfinder: **HEIZMANN, Frieder**
**Cité Jardin**
**CH-1141 Denens (CH)**
Erfinder: **LIETAR, Christian**
**Avenue A.-Forel 8**
**CH-1110 Morges (CH)**
Erfinder: **PIDOUX, Raymond**
**Chemin des Plateires 18**
**CH-1009 Pully (CH)**

Courier Press, Leamington Spa, England.

EP 0 306 485 B1

## Beschreibung

### Stand der Technik

Die Erfindung geht aus von einer Handwerkzeugmaschine zum Bohren und/oder Schlagbohren und/oder Hammerbohren nach der Gattung des Hauptanspruchs. Aus der DE—A—28 38 968 ist eine Bohrmaschine bekannt, die mit einer Vorrichtung zur Einstellung der Eindringtiefe des Bohrwerkzeugs in ein zu bearbeitendes Werkstück ausgerüstet ist. Die Vorrichtung enthält eine Reflexlichtschranke, die auf der Bohrmaschine beweglich angeordnet ist. Mit Hilfe eines Maßstabs wird durch Verschieben der Reflexlichtschranke die gewünschte Bohrlichtiefe eingestellt, bei deren Erreichen der Antriebsmotor der Bohrmaschine abgeschaltet wird. Eine kontinuierliche Anzeige der Bohrlochtiefe ist bei der bekannten Bohrmaschine nicht vorgesehen.

Der Erfindung liegt die Aufgabe zugrunde, die Bedienung einer Handwerkzeugmaschine zum Bohren und/oder Schlagbohren und/oder Hammerbohren, die eine optische Meßvorrichtung zum Erkennen einer vorgegebenen Bohrlochtiefe aufweist, zu vereinfachen.

### Vorteile der Erfindung

Die erfindungsgemäße Handwerkzeugmaschine weist den Vorteil auf, daß die Bohrlochtiefe kontinuierlich gemessen wird mit dem an sich bekannten, eine hohe Meßgenauigkeit aufweisenden Triangulationsverfahren. Bei diesem Verfahren projiziert eine Strahlungsquelle ein optisches Muster, vorzugsweise einen Punkt oder eine Linie, auf eine Oberfläche des Werkstücks und die an der Oberfläch diffraktierte Strahlung trifft auf wenigstens einen Strahlungsempfänger, der in der Bildfläche einer zwischen dem Strahlungsempfänger und dem Werkstück vorgesehen Sammellinse angeordnet ist. Die kontinuierliche Messung der Bohrlochtiefe ermöglicht es einer Bedienperson, rechtzeitig vor Erreichen der Bohrloch-Solltiefe den Anpreßdruck zu reduzieren. Diese Gefahr der Überschreitung der Bohrloch-Solltiefe besteht insbesondere bei der Bearbeitung von Weicheren Materialen.

Besonders vorteilhaft ist ferner die einfache Bedienung zu Beginn des Bohrens, weil die Null-Stellung der Bohrlochtiefenanzeige zu Bohrbeginn beispielsweise durch einen Tastendruck herstellbar ist, wobei eine beliebige Bohrerlänge automatisch bei Bohrlochtiefenmessung berücksichtigt wird.

Die erfindungsgemäße Vorrichtung enthält keine beweglichen Teile und erfordert deshalb keine besondere Wartung.

Durch die in den abhängigen Patent ansprüchen aufgeführten Maßnahmen sind vorteilhafte Weiterbildungen der im Patentanspruch 1 angegebenen Handwerkzeugmaschine möglich.

Vorteilhaft ist die Anordnung der Strahlungsquelle im Brennpunkt einer ersten Linse, die ein paralleles Strahlenbündel auf das zu bearbeitende Werkstück richtet. Mit dieser Maßnahme ist die Größe der auf die Oberfläche des zu bearbeitenden Werkstücks projizierten Linie oder des Punkts weitgehend unabhängig vom Abstand zwischen der Handwerkzeugmaschine und dem Werkstück.

Als Strahlungsquelle ist zweckmäßigerweise eine Halbleiterstrahlungsquelle vorgesehen. Insbesondere eignet sich hier eine Leuchtdiode, welche eine Strahlung im sichtbaren Spektralbereich emittiert, so daß der Bezugspunkt der Messung auf dem zu bearbeitenden Gegenstand sichtbar ist. Ein gepulster Betrieb der Leuchtdiode ermöglicht eine hohe Impulsstrahlungsleistung. Der geringere Energieverbrauch im gepulsten Betrieb macht sich besonders vorteilhaft bei batteriebetriebenen Geräten bemerkbar.

(Fortsetzung ursprüngliche Seite 3 der Beschreibung).

Ein hohes Signal zu Rauschverhältnis wird erreicht, wenn die Leichtdiode im Brennpunkt einer ersten Sammellinse und der Strahlungsempfänger in der Bildebene einer zwischen dem Strahlungsempfänger und dem zu bearbeitenden Werkstück befindlichen zweiten Sammellinse angeordnet ist.

Für die Ausführung des Strahlungsempfängers gibt es mehrere Möglichkeiten, welche jeweils spezifische Vorteile aufweisen.

In einem ersten Ausführungsbeispiel besteht der Strahlungsempfänger aus einem ersten und zweiten Sensor, einem optischen Strahlteiler und einem weiteren, von dem ersten Strahlungsempfänger angeordneten, optischen Bauelement. Das optische Bauelement kann eine flächiges Durchlaßfilter mit ortsabhängigem Transmissionsgrad oder eine Blende mit ortsabhängiger Öffnung sein. Der zweite Strahlungssensor stellt ein Bezugssignal für das Ausgangssignal des ersten Sensors zur Verfügung, welcher für die Positionsdetektion zuständig ist. Der Vorteil dieser Anordnung liegt darin, daß einfachste Strahlungssensoren, beispielsweise Fotodioden, verwendet werden können, und das Meßergeb n is unabhänig vom Reflexionsgrad der zu bearbeitenden Oberfläche ist.

In einem zweiten Ausführungsbeispiel wird ein einziger flächiger Strahlungsempfänger verwendet, vor welchem ein optisches Bauelement vorgesehen ist, welches strahlungsdurchlässige und strahlungsundurchlässige Bereiche aufweist. Vorzugsweise wird hier ein optisches Gitter verwendet. Die Anzahl der Zählimpulse, die durch Unterbrechen bzw. Durchlassen der Strahlung entstehen, sind ein Maß für die Abstandsänderung. Diese Ausführung kann vorteilhaft modifiziert werden durch Verwendung eines zweiten Strahlungssensors und eines zweiten Gitters, wobei die strahlungsdurchlässigen bzw. undurchlässigen Bereiche der beiden optischen Gitter gegeneinander versetzt sind, so daß die Richtung der Abstandsänderung feststellbar ist.

In einem dritten Ausführungsbeispiel wird als Strahlungsempfänger eine Anordnung, bestehend aus vielen Einzelsensoren, eingesetzt, Verwendbar sind Fotodiodenzeilen sowie Charged-Coupled-Device-(CCD-)Zeilen.

Das Strahlungssignal wird in einer signalverarbeitenden Anordnung aufbereitet, welche über optische und akustische Ausgabevorrichtungen sowie über eine Daten-Eingabevorrichtung verfügt. Ist die Entfernungsmeßvorrichtung für eine Bohrmaschine vorgesehen, dann wird in dieser Anordnung aus der Entfernungsänderung die erreichte Bohrlochtiefe berechnet. Über die Eingabevorrichtung kann eine gewünschte Solltiefe vorgegeben werden. Die optische Ausgabevorrichtung zeigt kontinuierlich die berechnete Bohrlochtiefe oder die zur Solltiefe bestehende Differenz an. Mit der akustischen Ausgabevorrichtung ist ein Warnsignal kurz vor Erreichen der Solltiefe abgebbar, damit eine Bedienperson die auf die Handwerkzeugmaschine ausgeübte Vorschubkraft rechtzeitig reduzieren kann.

Die gesamte Entfernungsmessungseinrichtung ist in einem abnehmbaren Griff an der Handwerkzeugmaschine befestigt oder unmittelbar in das Gehäuse der Handwerkzeugmaschine integriert.

Weitere Einzelheiten der erfindungsgemäßen Handwerkzeugmaschine ergeben sich aus weiteren Unteransprüchen in Verbindung mit der folgenden Beschreibung.

Zeichnung

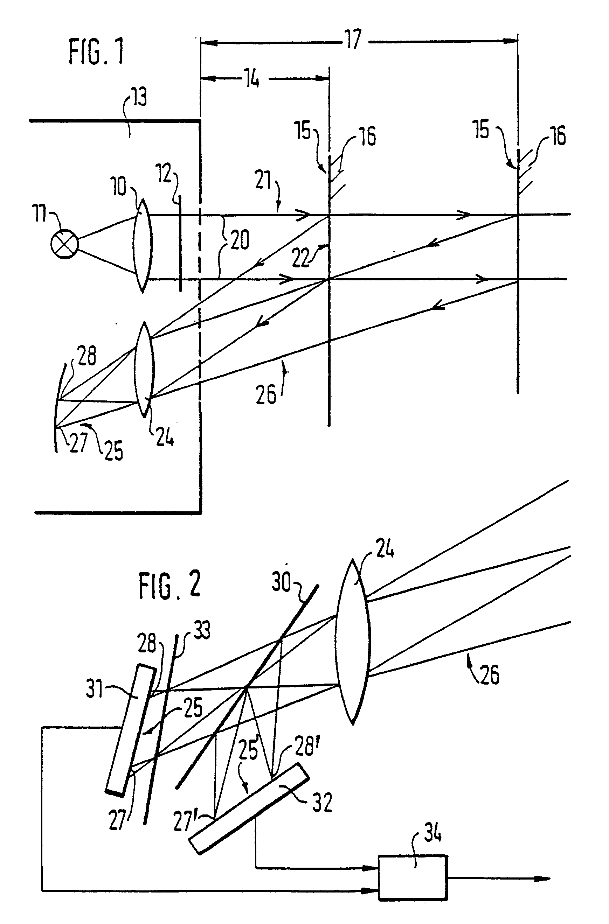

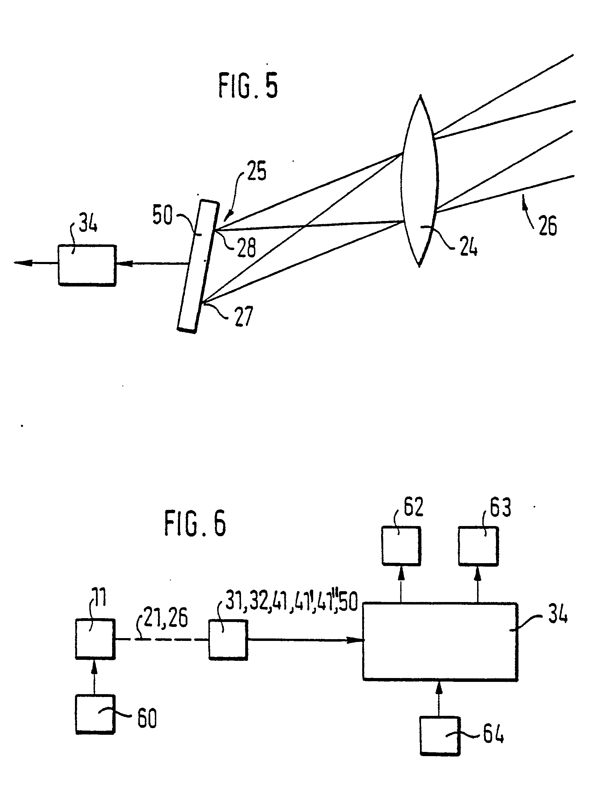

Figure 1 zeigt die optische Anordnung der Entfernungsmessungsvorrichtung, die Figuren 2 bis 5 zeigen unterschiedliche Ausführungsformen der Strahlungsempfängeranordnung und Figur 6 zeigt ein Blockschaltbild einer optoelektronischen Anordnung.

Beschreibung der Ausführungsbeispiele

Figur 1 zeigt eine im Brennpunkt einer ersten Linse 10 angeordnete Strahlungsqelle 11. Vor dar ersten Linse 10 befindet sich eine Blende 12. Die erste Linse 10, die Strahlungsquelle 11, sowie die Blende 12 sind innerhalb einer Handwerkzeugmaschine 13 angeordnet. In einem ersten Abstand 17 von der Werkzeugmaschine 13 befindet sich eine Oberfläche 15 eines zu bearbeitenden Werkstücks 16. Während des Bearbeitungsvorganges ändert sich der erste Abstand 17 zu einem zweiten Abstand 14. Mit 20 sind Randstrahlen der von der Strahlungsquelle 11 emittierten Strahlung 21 bezeichnet. Die Randstrahlen 20 begrenzen einen bestrahlten Teil 22 der Oberfläche 15 des zu bearbeitenden Werkstückes 16. Der bestrahlte Oberflächenteil 22 wird mit einer zweiten Linse 24 in eine Bildfläche 25 abgebildet. Der im zweiten Abstand 14 von der Handwerkzeugmaschine 13 befindlichen Oberfläche 22 ist ein erstes Bild 27 und der im ersten Abstand 17 befindlichen Oberfläche 22 ist ein zweites Bild 28 zugeordnet.

Figur 2 zeigt ein erstes Ausführungsbeispiel der Strahlungsempfängeranordnung. Die von der bestrahlten Oberfläche 22 reflektierte Strahlung 26 trifft nach Passieren der zweiten Linse 24 auf einen Strahlteiler 30. Der Srahlteiler 30 lenkt die einfallende Strahlung sowohl auf einen ersten Strahlungsempfänger 31 als auch auf einem zweiten Strahlungsempfänger 32. Der erste Sensor 31 ist in der Bildfläche 25 angeordnet, in welcher der

erste und zweite Bildpunkt 27, 28 liegen. Davor befindet sich ein optisches Bauelement 33. Die Ausgangssignale des ersten und zweiten Sensors 31, 32 gelangen in eine signalverarbeitende Anordnung 34.

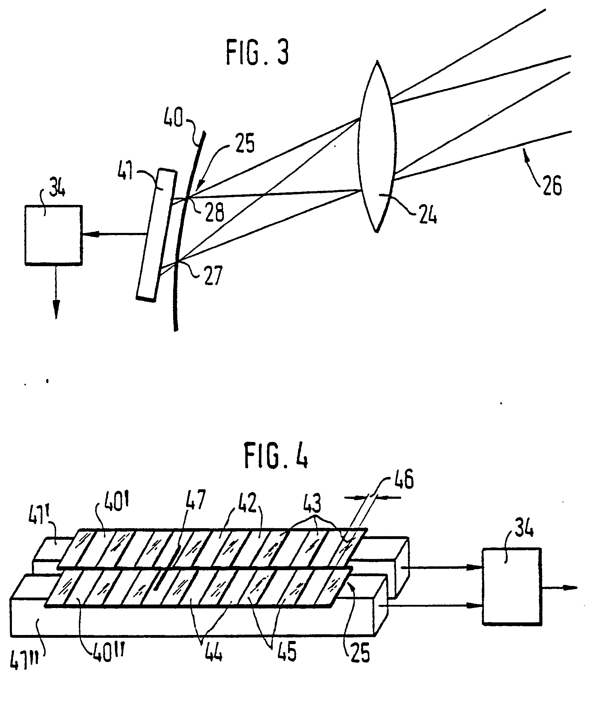

Figur 3 zeigt ein zweites Ausführungsbeispiel der Strahlungsempfängeranordnung. Die von der bestrahlten Oberfläche 22 reflektierte Strahlung 26 bildet die zweite Linse 24 auf ein optisches Bauelement 40 ab. Das optische Bauelement 40 ist in der Bildfläche 25 angeordnet, in welcher die beiden Bildpunkte 27, 28 liegen. Dicht benachbart zum optischen Bauelement 40 ist ein Strahlungsempfänger 41 vorgesehen, der ein Ausgangssignal in die signalverarbeitende Anordnung 34 abgibt.

Figur 4 zeigt ein drittes Ausführungsbeispiel einer Strahlungsempfängeranordnung. Das optische Bauelement 40 und der Strahlungsempfänger 41 gemäß Figur 3 sind doppelt vorhanden 40', 40'', 41', 41''. Strahlungsdurchlässige Bereiche des dem einen Strahlungsempfänger 41' zugeordneten optischen Bauelementes 40' sind in der Bildfläche 25 gegenüber den strahlungsdurchlässigen 44 bzw. strahlungsundurchlässigen 45 Bereichen des dem anderen Strahlungssensor 41'' zugeordneten optischen Bauteils 40'' gegeneinander um einen Versatz 46 angeordnet. Mit 47 ist ein auf die Strahlungsempfängeranordnung 40', 40'', 41', 41'' auftreffendes Strahlungsmuster bezeichnet. Die beiden Sensoren 41', 41'' geben ein Signal an die signalverabeitende Anordnung 34 ab.

Figur 5 zeigt ein viertes Ausführungsbeispiel einer Strahlungsempfängeranordnung. Die von der bestrahlten Oberfläche 22 reflektierte Strahlung 26 wird von der zweiten Linse 24 auf einen Strahlungsempfänger 50 abgebildet, dessen sensitive Fläche in der Bildfläche 25 liegt. Der Strahlungsempfänger 50 besteht in diesem Ausführungsbiespiel aus mehreren Einzelsensoren oder aus einer positionsempfindlichen Fotodiode.

Figur 6 zeigt ein Blockschaltbild einer optoelektronischen Anordnung. Die Strahlungsquelle 11 ist angesteuert von einem Impulsgenerator 60. Die optische Strahlung 21, 26 gelangt auf wenigstens einen Strahlungsempfänger 31, 32, 41, 41', 41'', 50, dessen Ausgangssignal in die signalverarbeitende Anordnung 34 gelangt. Die signalverarbeitende Anordnung 34 verfügt, über eine optische und akustische Ausgabeeinrichtung 62, 63 sowie über eine Eingabevorrichtung 64.

Die Entfernungsmeßvorrichtung gemäß Figur 1 arbeitet folgendermaßen:

Die von der Strahlungsquelle 11 ausgehende Strahlung wird mit der ersten Linse 10 auf das Werkstück 16 gerichtet. Befindet sich die Strahlungsquelle 11 im Brennpunkt der als Sammellinse ausgebildeten ersten Linse 10, so ergibt sich ein von Randstrahlen 20 begrenztes paralleles Strahlenbündel der emittierten Strahlung 21. Mit der unmittelbar neben der ersten Linse 10 angeordneten Blende 12 können bestimmte Strahlungsanteile ausgeblendet werden, um ein bestimmtes optisches Muster auf der Oberfläche 15 des Werkstücks 16 zu erzeugen. Die emittierte Strahlung 21 trifft auf eine Teilfläche 22 der zu bearbeitenden Oberfläche 15 und wird dort diffus gestreut. Die zweite Linse 24, die ebenfalls als Sammellinse ausgebildet ist, empfängt einen Teil der reflektierten Strahlung 26 und bildet den bestrahlten Teil 22 der Oberfläche 15 in die Bildfläche 25 ab. Ein mit der Blende 12 erzeugtes flächiges Muster des Strahlungssignals tritt als Bild in der Bildfläche 25 der zweiten Linse 24 auf.

Die optische Anordnung ist befestigt in oder an der Handwerkzeugmaschine 13, deren Abstand 14, 17 von der Oberfläche 15 des Werkstücks 18 bestimmt werden soll. Die Lage des Bildes 27, 28 der bestrahlten Oberfläche 22 in der Bildfläche 25 ist eine eindeutige Funktion dieses Abstandes. Beispielsweise erfolgt die Abbildung bei gegebenem zweiten Abstand 14 in das erste Bild 27 und bei vorliegendem ersten Abstand 17 in das zweite Bild 28. Diese beschriebene Methode zur Messung eines bestimmten Abstandes ist als Triangulationsverfahren in der Meßtechnik an sich bekannt (VDI-Zeitung 125 (1983) Nr. 21, S. 876). Eine kontinuierliche Ermittlung der Abstandsänderung während eines Bearbeitungsvorgangs mit Hilfe des Triangulationsverfahrens ist jedoch bislang nicht bekannt geworden.

Zur Erfassung der unterschiedlichen Positionen der Bilder 27, 28 ist eine Strahlungsempfängeranordnung vorgesehen. Figure 2 zeigt ein erstes Ausführungsbeispiel. Nach Durchgang der reflektierten Strahlung 26 durch die zweite Linse 24 trifft die Strahlung auf den Strahlteiler 30. Der Strahlteiler 30 ist ein halbdurchlässiger Spiegel, dessen Reflexions- und Transmissionsgrad beispielsweise jeweils 50% betragen kann. Die vom Strahlteiler 30 durchgelassene Strahlung trifft nach Passieren des optischen Bautelementes 33 auf den ersten Strahlungsempfänger 31. Der erste Strahlungsempfänger 31 ist als flächiger Sensor ausgebildet, der ein Ausgangsignal ausgibt unabhängig von der Auftreffstelle der Strahlung, jedoch abhängig von der Bestrahlungsstärke. Die Fläche des Sensors muß so bemessen sein, daß sowohl das Bild 27 der im zweiten Abstand 14 vor der Handwerkzeugmaschine 13 bestrahlten Fläche 22 als auch das Bild 28 der im ersten Abstand 17 befindlichen Fläche 22 auf die Sensorfläche fallen kann. Die Sensorfläche sollte zur Erzielung einer optimal scharfen Abbildung mit der Bildfläche 25 übereinstimmen und ist deshalb im Idealfall leicht gekrümmt. Die unterschiedlichen Positionen der beiden Bilder 27, 28 müssen sich nun aus dem Ausgangsignal des ersten Sensor 31 ableiten lassen. Dies ist möglich durch das optische Bauelement 33, welches einen ortsabhängigen Transmissionsgrad aufweist, auf einer Fläche, die wenigstens ebenso groß ist wie die des ersten Sensors 31. Der erste und zweite Bildpunkt 27, 28 treffen daher mit unterschiedlicher Besrahlungstärke auf den ersten Sensor 31 und führen zu einem unterschiedlich hohen Ausgangsignal. Der Absolutwert des Ausgangsignal des ersten Sensors 31 liefert jedoch noch keine eindeutige Aussage über den Auftreffort des Bildes der bestrahlten Oberfläche 22, da je nach Beschaffenheit des Werkstücks 16 mit einem erheblich schwankenden Reflexionsgrad der bestrahlten Oberfläche 22 gerechnet werden muß, und unterschiedliche geometrische Verhältnisse die Strahlstärke der reflektierten Strahlung 26 beeinflussen. Die erforderliche Normalisierung des Ausgangssignal des ersten Sensors 31 erfolgt in der signalverarbeitenden Anordnung 34, der zu diesem Zwecke das Ausgangssignal des zweiten Strahlungsempfängers 32 zugeführt wird. der zweite Strahlungsempfänger 32 ist identisch aufgebaut wie der erste Sensor 31. Die vom Strahlteiler 30 reflektierte Strahlung trifft auf den zweiten Sensor 32. Auch er ist so nahe wie möglich an der Bildfläche 25' angeordnet, so daß die Bilder 27', 28' der bestrahlten Oberfläche 22 auf die Oberfläche des zweiten Strahlungssensors 32 möglichst scharf abgebildet werden. Dadurch ist auch eine kleine Sensorfläche ausreichend. Im Strahlengang zwischen dem Strahlteiler 30 und dem zweiten Sensor 32 ist kein weiteres optisches Bauelement vorgesehen. Eine Division in der signalverarbeitenden Anordnung 34 mit dem Ausgangssignal des zweiten Sensors 32 als Divisor und dem Ausgangssignal des ersten Sensors 31 als Dividend ermöglicht eine eindeutige Zuordnung der Positionen der Bilder 27, 28 am ersten Sensor 31 unabhängig von der Beschaffenheit der Oberfläche 22. Alternativ zu der Ausführungsform des optischen Bauelementes 33 als Filter mit ortsabhängigem Transmissionsgrad kann dieses Bauelement auch als Blende mit ortsabhängiger Öffnung ausgeführt sein.

Im zweiten Ausführungsbeispiel der Strahlungsempfängeranordnung nach Figur 3 fällt die von der bestrahlten Oberfläche 22 reflektierte Strahlung 26 nach Durchgang durch die zweite Linse 24 und Passieren des optischen Bauelementes 40 auf den Strahlungsempfänger 41. Der Strahlungsempfänger 41 ist ein flächiger Sensor, dessen Ausgangssignal von der Bestrahlungsstärke abhängt, jedoch nicht vom Auftreffort auf die aktive Fläche. Das optische Bauelement 40 weist strahlungsdurchlässige und strahlungsundurchlässige Bereiche auf. Vorteilhafterweise wird hier ein optisches Gitter verwendet. Das Gitter 40 ist in der Bildfläche 25 angeordnet. Vorzugsweise ist das Gitter 40 entsprechend der Bildfläche 25 leicht gekrümmt, damit die in unterschiedlichen Bildebenen scharf abgebildeten Bilder 27, 28 der Oberfläche 22 auf dem Gitter 40 scharf abgebildet werden. Optische Verzerrungseffekte und geometrische Einflüsse können auch durch unterschiedlichen Abstände zwischen den strahlungsdurch- und undurchlässigen Bereichen des Gitters 40 kompensiert werden. Die genaue Lage des Sensors 41 hinter dem Gitter 40 ist unkritisch, solange die durch das Gitter 40 durchtretende Strahlung die aktive Oberfläche des Strahlungssensors 41 erreicht. Dies ist deshalb möglich, weil die Bestrahlungsstärke in diesem zweiten Ausführungsbeispiel keine Rolle spielt, da die Änderung des Abstandes 14, 17 durch Impulszählung ermittelt wird. Ändert sich der Abstand der bestrahlten Oberfläche 22 vn der Handwerkzeugmaschine 13, so wandert das Bild der bestrahlten Oberfläche 22 vom ersten Bild 27 zum zweiten Bild 28. Auf diesem Weg trifft es abwechselnd auf strahlungsdurchlässige und strahlungsundurchlässige Bereiche des Gitters 40. Daraufhin wird in der signalverarbeitenden Anordnung 34 ein Zählvorgang ausgelöst, dessen Ergebnis ein Maß für die Änderung des Abstandes 14, 17 darstellt.

Figur 4 zeigt ein drittes Ausführungsbeispiel der Strahlungsempfängeranordnung. Es stellt eine vorteilhafte Modifizierung des zweiten Ausführungsbeispiels gemäß Figur 3 dar. Diese Anordnung ermöglicht es, neben der Änderung des Abstandes 14, 17 auch die Richtung der Abstandsänderung zu erkennen. Das erste optische Bauelement 40' und das zweite optische Bauelement 40'' sind nebeneinander angeordnet. Beide Elemente 40', 40'' weisen strahlungsdurchlässige Bereiche 42, 44 und strahlungsundurchlässige Bereiche 43, 45 auf. Diese Bereiche sind mit einem bestimmten Versatz 46 zueinander angeordnet. Hinter den optischen Bauelementen 40', 40'', die vorzugsweise als Gitter ausgebildet sind, ist jeweils ein erster 41' und zweiter 41'' Strahlungsempfänger vorgesehen. Die beiden Strahlungsempfänger 41', 41'' geben ein Ausgangssignal an die signalverarbeitende Anordnung 34 ab, wenn eine Strahlung durch strahlungsdurchlässigen Bereiche 42, 44 der beiden Gitter 40', 40'' hindurchtritt. Die Größe des Bildes dee bestrahlten Oberfläche 22 muß so bemessen sein, daß stets beide Strahlungsempfänger 41', 41'' ein Strahlungssignal erhalten können. Vorteilhafterweise wird die vor der ersten Linse 10 angeordnete Blende 12 als Schlitzblende ausgeführt, so daß auf die bestrahlte Oberfläche 22 ein strichförmiges Muster projiziert wird, dessen Bild in der Bildfläche 25 hinter der zweiten Linse 24 ebenfalls ein strichförmiges Strahlungsmuster 47 ergibt. Eine Änderung des Abstandes 14, 17 führt in Verbindung mit dem Versatz 46 der beiden Gitter 40', 40'' zu zeitlich versetzten Signalen der Strahlungsempfänger 41', 41''. In der signalverarbeitenden Anordnung 34 wird aus Signalen die Richtung der Abstandsänderung ermittelt.

Ein viertes Ausführungsbeispiel der Strahlungsempfängeranordnung zeigt Figur 5. Die von der bestrahlten Oberfläche 22 reflektierte Strahlung 26 trifft nach Durchgang durch die zweite Linse 24 auf den Strahlungsempfänger 50. Die aktive Fläche des Sensors 50 befindet sich in der Bildfläche 25, in welcher Bilder 27, 28 der Oberfläche 22 liegen. Der Strahlungsempfänger 50 besteht aus zahlreichen, nebeneinander angeordneten, Einzelsensoren. Verwendet werden können Fotodiodenzeilen oder CCD-Zeilen. Die Sensorzeile 50 liefert ein Ausgangssignal in die signalverarbeitende Anordnung 34, wobei die Position der Bilder 27, 28 durch die Multiempfängeranordnung unmittelbar feststellbar ist.

Als Strahlungsempfänger 50 kann auch eine positionsempfindliche Fotodiode verwendet werden, die neuerdings erhältlich ist. Diese flächig ausgeführte positionsempfindliche Fotodiode arbeitet wie ein optisches Potentiometer. Ein durch sie fließender Strom ist eine eindeutige Funktion des Auftreffpunkts der Strahlung auf der aktiven Oberfläche. Das Stromsignal wird in der signalverarbeitenden Anordnung 34 aus gewertet und die Position de Bilder 27, 28 bestimmt.

Figur 6 zeigt das Blockschaltbild der optoelektronischen Schaltungsanordnung. Die Strahlungsquelle 11 wird von einem Impulsgenerator 60 angesteuert. Der getaktete Betrieb der Strahlungsquelle 11 ermöglicht eine Erhöhung des erreichbaren Signals Rauschverhältnisses durch Erhöhung der Strahlungsleistung der Strahlungsquelle 11 bei gleichzeitiger Energieeinsparung. Bei Verwendung einer Halbleiterstrahlungsquelle, beispielsweise einer Leuchtdiode, ist es möglich, unter Beibehaltung der maximal zulässigen Dauerleistung, die Impulsspitzenleistung im getakteten Betrieb durch Variation des Tastverhältnisses erheblich zu erhöhen. Eine hohe Impulsstrahlungsleistung reduziert die erforderliche Empfindlichkeit des Strahlungsempfängers. Ein Einfluß von Fremdstrahlungsanteilen auf das Meßergebnis, welches beispielsweise durch künstliche Beleuchtung des zu bearbeitenden Gegenstandes 16 oder durch Umgebungslicht auftreten kann, wird durch eine elektronische Filteranordnung in der signalverarbeitenden Anordnung 34 ausgeschaltet durch Ausblendung von Signalanteilen, welche eine andere als die durch den getakteten Betrieb vorgegebene Frequenz aufweisen.

Die signalverarbeitende Anordnung 34 ermittelt aus der Position der Bilder 27, 28 den Abstand 14, 17 bzw. die Abstandsänderung der bestrahlten Oberfläche 22 von der Handwerkzeugmaschine 13. Handelt es sich bei der Handwerkzeugmaschine 13 um eine Bohrmaschine, so ist die Änderung des Abstandes 14, 17 unmittelbar ein Maß für die erreichte Bohrlochtiefe. Die optoelektronische Anordnung nach Figur 6 muß zur Durchführung dieser Aufgabe an der Handwerkzeugmaschine 13 befestigt sein. Die Anordnung kann beispielsweise in das Gehäuse der Handwerkzeugmaschine 13 eingebaut sein, es ist jedoch auch möglich, die gesamte Anordnung in einen anmontierbaren Haltegriff oder einem anflanschbaren Gehäuse einzubauen. Eine Anordnung im Haltegriff der Werkzeugmaschine 13 bringt den Vorteil mit sich, daß die Entfernungsmeßvorrichtung als Zubehörteil angeboten werden kann. Zweckmäßigerweise wird die Schaltungsanordnung bei einer Anordnung im Haltegriff von einer Batterie mit Energie versorgt. Der getaktete Betrieb der Strahlungsquelle 11 wird dann ausgenutzt zur Reduzierung des Energiebedarfs der Strahlungsquelle 11, womit die Zeitabstände zwischen Batteriewechsel verlängert werden.

Die signalverarbeitende Anordnung verfügt wenigstens über eine optische Ausgabevorrichtung 62 zur Anzeige des Abstandes 14, 17 bzw. der erreichten Bohrlochtiefe. Weiterhin ist eine akustische Ausgabevorrichtung 63 sowie eine Eingabevorrichtung 64 vorgesehen. Mit der Eingabevorrichtung 64 ist es möglich, in die signalverarbeitende Anordnung 34 einen Sollwert der Bohrlochtiefe einzugeben, nach dessen Erreichen die Bohrmaschine 13 selbsttätig abgeschaltet wird. Über die akustische Ausgabevorrichtung 63 ist ein akustisches Signap kurz vor Erreichen der programmierten Solltiefe der Bohrung abgebbar. Das akustische Signal veranlaßt den Benutzer der Bohrmaschine 13 zur Reduzierung der Vorschubkraft. Mit dieser Methode ist eine Überschreitung der Solltiefe des Bohrloches, wie sie insbesondere in weichen Materialien auftreten kann, leicht vermeidbar. Eine weitere Information erhält der Benutzer durch die kontinuierliche Anzeige der erreichten Bohrlochtiefe auf der Anzeigevorrichtung 62. In einer anderen Betriebsart ist es auch möglich, die verbleibende Differenz bis zum Erreichen der Solltiefe anzuzeigen. Der Schwellwert vor dem Erreichen der Solltiefe, bei welchem das akustische Signal ausgelöst wird, kann ebenfalls über die Eingabevorrichtung 64 der signalverarbeitenden Anordnung 34 mitgeteilt werden. Die Annäherung an den Sollwert der Bohrlochtiefe kann auch durch die optische Anzeigevorrichtung 62 angezeigt werden, beispielsweise durch Blinken oder durch eine Farbänderung der Anzeige. Die kontinuierliche Messung der erreichten Bohrlochtiefe setzt voraus, daß zu Beginn des Bohrvorgangs die signalverarbeitende Anordnung 34 auf einen Ausgangszustand zurückgesetzt wurde. Diese Nullsetzung kann beispielsweise durch den Einschaltvorgang der Bohrmaschine 13 ausgelöst werden, vorteilhafter ist es jedoch, wenn die Nullstellung über die Eingabevorrichtung 64 erfolgt. Ein gelegentliches Abschalten der Bohrmaschine 14 während des Bohrvorganges ist somit ohne Einfluß auf jus Ergebnis.

Der Bohrlochtiefenbereich ist gegenüber bekannten Meßvorrichtungen erheblich erweitert. Problemlos werden Abstände bis zu 0,5 m verarbeitet—ausreichend für alle sinnvollen Bohrerlängen. Die Meßgenauigkeit ist hoch durch einen eindeutigen Bezugspunkt der Messung (bestrahlte Fläche 22) unmittelbar Neben dem Bohrloch. Der Bezugspunkt ist sichtbar, wenn die Leuchtdiode 11 eine Strahlung im sichtbaren Spektralbereich emittiert.

**Patentansprüche**

1. Handwerkzeugmaschine zum Bohren und/oder Schlagbohren und/oder Hammerbohren, die eine optische Meßvorrichtung zum Erkennen einer vorgegebenen Bohrlochtiefe aufweist, dadurch gekennzeichnet, daß eine signalverarbeitende Anordnung (34) mit einer optischen (62) und/oder einer akustischen (63) Ausgabevorrichtung sowie mit einer Eingabevorrichtung (64) vorsehbar ist zur kontinuierlichen Bohrlochtiefenmessung der Handwerkzeugmaschine (13) in einem zu bearbeitenden Werkstück (16) mit der an sich bekannten Triangulation, bei der eine Strahlungsquelle (11) ein optisches Muster, vorzugsweise einen Punkt oder eine Linie, auf eine Oberfläche (15, 22) des Werkstücks (16) projiziert und die von der Oberfläche (15, 22) reflektierte Strahlung (26) auf wenigstens einen Strahlungsempfänger (31, 32, 41, 41', 41'', 50) trifft, der in der Bildfläche (25, 25') einer zwischen dem Strah-lungsempfänger (31, 32, 41, 41', 41'', 50) und dem Werkstück (16) vorgesehenen Sammellinse (24) angeordnet ist.

2. Handwerkzeugmaschine nach Anspruch 1, dadurch gekennzeichnet, daß die Strahlungsquelle (11) im Brennpunkt einer ersten Linse (10) angeordnet ist.

3. Handwerkzeugmaschine nach Anspruch 2, dadurch gekennzeichnet, daß zwischen der ersten Linse (10) und der bestrahlten Oberfläche (15, 22) eine Blende (12), vorzugsweise eine Schlitzblende, angeordnet ist.

4. Handwerkzeugmaschine nach einem der Ansprüche 1 bis 3, dadurch gekennzeichnet, daß die Strahlungsquelle (11) eine Halbleiterstrahlungsquelle, insbesondere eine Leuchtdiode ist.

5. Handwerkzeugmaschine nach einem der Ansprüche 1 bis 4, dadurch gekennzeichnet, daß der Strahlungsempfänger besteht aus einem ersten (31) und zweiten (32) Strahlungssensor, einem Strahlteiler (30), vorzugsweise einen teildurchlässigen Spiegel, welcher zwischen der zweiten Linse (24) und den beiden Sensoren (31, 32) angeordnet ist, aus einem vor dem ersten Sensor (31) angeordneten flächigen Durchlaßfilter (33) mit ortsabhängigem Transmissionsgrad und einer signalverarbeitenden Anordnung (34), in welcher die Ausgangssignale der beiden Sensoren (31, 32) verarbeitet werden (Figur 2).

6. Handwerkzeugmaschine nach Anspruch 5, dadurch gekennzeichnet, daß anstelle des flächigen Durchlaßfilters (33) eine Blende mit ortsabhängiger Öffnung vorgesehen ist.

7. Handwerkzeugmaschine nach einem der Ansprüche 1 bis 4, dadurch gekennzeichnet, daß zwischen dem Strahlungsempfänger (41, 41', 41'') und der zweiten Linse (24) ein optisches Bauelement (40, 40', 40'') mit strahlungsdurchlässigen und strahlungsundurchlässigen Bereichen, vorzugsweise ein optisches Gitter, angeordnet ist (Figuren 3 und 4).

8. Handwerkzeugmachine nach einem der Ansprüche 1 bis 4, dadurch gekennzeichnet, daß der Strahlungsempfänger besteht aus einem ersten (41') und einem zweiten (41'') Strahlungssensor mit jeweils zwischen den Sensoren (41', 41'') und der zweiten Linse (24) angeordneten optischen Bauelementen (40', 40''), welche strahlungsdurchlässige und strahlungsundurchlässige Bereiche aufweisen, vorzugsweise optische Gitter, wobei die strahlungsdurchlässigen bzw. -undurchlässigen Bereiche des einen Gitters (40') gegenüber denen des anderen Gitters (40'') um einen Versatz (46) zueinander angeordnet sind (Figur 4).

9. Handwerkzeugmaschine nach einem der Ansprüche 7 oder 8, dadurch gekennzeichnet, daß die Abmessungen der strahlungsdurchlässigen bzw. strahlungsundurchlässigen Bereiche der optischen Bauelemente (40', 40'') zumindest in Teilbereichen unterschiedlich sind.

10. Handwerkzeugmaschine nach einem der Ansprüche 1 bis 4, dadurch gekennzeichnet, daß der Strahlungsempfänger (50) aus mehreren Einzelsensoren besteht, die vorzugsweise in Zeilenform angeordnet sind (Figur 5).

11. Handwerkzeugmaschine nach einem der Ansprüche 1 bis 4, dadurch gekennzeichnet, daß der Strahlungsempfänger (50) eine positionsempfindliche Halbleiter-Fotodiode ist (Figur 5).

12. Handwerkzeugmaschine nach einem der Ansprüche 1 bis 11, dadurch gekennzeichnet, daß zur Entfernungsberechnung vorgesehen sind eine signalverarbeitende Anordnung (34) mit einer optischen (62) und/oder einer akustischen (63) Ausgabevorrichtung sowie einer Eingabevorrichtung (64).

13. Handwerkzeugmaschinen nach einem der Ansprüche 1 bis 12, dadurch gekennzeichnet, daß die Einrichtung zur Entfernungsmessung in dem Gehäuse der Handwerkzeugmaschine (13) angeordnet ist.

14. Handwerkzeugmaschine nach einem der Ansprüche 1 bis 12, dadurch gekennzeichnet, daß die Einrichtung zur Entfernungsmessung in einem abnehmbaren Haltegriff der Handwerkzeugmaschine (13) angeordnet ist.

15. Handwerkzeugmaschine nach einem der Ansprüche 1 bis 12, dadurch gekennzeichnet, daß die Einrichtung zur Entfernungsmessung in einem an die Handwerkzeugmaschine (13) anflanschbaren Gehäuse angeordnet ist.

**Revendications**

1. Machine-outil portative pour le perçage, et/ou le perçage par percussion, et/ou le forage au marteau, qui comporte un dispositif optique de mesure pour détecter une profondeur prédéfinie du trou de perçage, machine-outil portative caractérisée en ce qu'un dispositif de traitement de signaux (34) est susceptible d'être muni d'un moyen optique (62) de sortie et/ou d'un moyen acoustique (63) de sortie, ainsi que d'un moteur d'entrée (64), pour permettre la mesure en continu de la profondeur du trou de perçage de la machine-outil portative (13) dans une pièce d'oeuvre à usiner (16) par le procédé en soi connu de triangulation, dans lequel une source de rayonnement (11) projette sur une surface (15, 22) de la pièce d'oeuvre (16) un modèle optique, de préférence un point ou une ligne, tandis que le rayonnement (26) réfléchi par la surface (15, 22) arrive au moins sur un récepteur de rayonnement (31, 32, 41, 41', 41'', 50) qui est disposé sur la surface d'image (25, 25') d'une lentille convergente (24) prévue entre le récepteur de rayonnement (31, 32, 41, 41', 41'', 50) et la pièce d'oeuvre (16).

2. Machine-outil portative selon la revendication 1, caractérisée en ce que la source de rayonnement (11) est disposée au foyer d'une première lentille (10).

3. Machine-outil portative selon la revendication 2, caractérisée en ce qu'entre la première lentille (10) et la surface irradiée (15, 22) est disposé un diaphragme (12), de préférence un diaphragme à fente.

4. Machine-outil portative selon une des revendications 1 à 3, caractérisée en ce que la source de rayonnement (11) est une source de rayonnement à semi-conducteurs, notamment une diode luminescente.

5. Machine-outil portative selon une des revendications 1 à 4, caractérisée en ce que le récepteur de rayonnement est constitué par un premier détecteur de rayonnement (31) et un second détecteur de rayonnement (32), par un diviseur de rayonnement (30), de préférence un miroir partiellement transparent, qui est disposé entre la seconde lentille (24) et les deux détecteurs (31, 32), par un filtre de passage plat disposé avant le premier détecteur (31) avec un taux de transmission dépendant de l'emplacement, et par un dispositif de traitement de signaux (34) dans lequel sont traités les signaux de sortie des deux détecteurs (31, 32) (figure 2).

6. Machine-outil portative selon la revendication 5, caractérisée en ce qu'au lieu du filtre de passage plat (33) il est prévu un diaphragme avec une ouverture dépendant de l'emplacement.

7. Machine-outil portative selon une des revendications 1 à 4, caractérisée en ce que, entre le récepteur de rayonnement (41, 41', 41'') et la seconde lentille (24), est disposé un composant optique (40, 40', 40'') avec des zones transparentes au rayonnement et des zones opaques au rayonnement, de préférence une grille optique (figures 3 et 4).

8. Machine-outil portative selon une des revendications 1 à 4, caractérisée en ce que le récepteur de rayonnement est constituée par un premier détecteur de rayonnement (41') et un second détecteur de rayonnement (41'') avec des composants optiques (40', 40'') respectivement disposés entre les détecteurs (41', 41'') et la seconde lentille (24), ces composants comportant des zones transparentes au rayonnement et des zones opaques au rayonnement, et étant de préférence, des grilles optiques, et les zones transparentes au rayonnement ou bien les zones opaques au rayonnement de l'une (40') des grilles présentant un décalage (46) par rapport aux zones de l'autre grille (40'') (figure 4).

9. Machine-outil portative selon une des revendications 7 ou 8, caractérisée en ce que les dimensions des zones transparentes au rayonnement ou des zones opaques au rayonnement des composants optiques (40', 40'') sont différentes, tout au moins dans des zones partielles.

10. Machine-outil portative selon une des revendications 1 à 4, caractérisée en ce que le récepteur de rayonnement (50) est constitué de plusieurs détecteurs individuels qui sont, de préférence, disposés sous forme de lignes (figure 5).

11. Machine-outil portative selon une des revendications 1 à 4, caractérisée en ce que le détecteur de rayonnement (50) est une photodiode semi-conducteur sensible à la position (figure 5).

12. Machine-outil portative selon une des revendications 1 à 11, caractérisée en ce que pour le calcul de la distance, il est prévu un dispositif de traitement de signaux (34) avec un dispositif optique de sortie (62) et/ou un dispositif acoustique de sortie (63), ainsi qu'un dispositif d'entrée (64).

13. Machine-outil portative selon une des revendications 1 à 12, caractérisée en ce que le dispositif pour la mesure de la distance est disposé dans le boîtier de la machine-outil portative (13).

14. Machine-outil portative selon une des revendications 1 à 12, caractérisée en ce que le dispositif pour mesurer la distance est disposé dans une poignée de maintien amovible de la machine-outil portative (13).

15. Machine-outil portative selon une des revendications 1 à 12, caractérisée en ce que le dispositif pour mesurer la distance est disposé dans un boîtier susceptible d'être bridé sur la machine-outil portative (13).

**Claims**

1. Powered hand tool for drilling and/or percussion drilling and/or hammer drilling which has an optical measuring device for detecting a predetermined drill-hole depth, characterized in that a signal-processing arrangement (34) having an optical (62) and/or an acoustic (63) output device and also an input device (64) can be provided for the continuous measurement of the drill-hole depth of the powered hand tool (13) in a workpiece (16), to be machined, by the triangulation method known per se, in which a radiation source (11) projects an optical pattern, preferably a point or a line, onto a surface (15, 22) of the workpiece (16), and the radiation (26) reflected from the surface (15, 22) strikes at least one radiation receiver (31, 32, 41, 41', 41'', 50) which is arranged in the image area (25, 25') of a convergent lens (24) provided between the radiation receiver (31, 32, 41, 41', 41'', 50) and the workpiece (16).

2. Powered hand tool according to Claim 1, characterized in that the radiation source (11) is arranged at the focal point of a first lens (10).

3. Powered hand tool according to Claim 2, characterized in that a diaphragm (12), preferably a slit diaphragm, is arranged between the first lens (10) and the irradiated surface (15, 22).

4. Powered hand tool according to any of Claims 1 to 3, characterized in that the radiation source (11) is a semiconductor radiation source, in particular a light emitting diode.

5. Powered hand tool according to any of Claims 1 to 4, characterized in that the radiation receiver consists of a first (31) and a second (32) radiation sensor, a ray divider (30), preferably a partly permeable mirror, which is arranged between the second lens (24) and the two sensors (31, 32), of a plane pass filter (33) arranged in front of the first sensor (31) and having a degree of transmission dependent on location, and a signal-processing arrangement (34) in which the output signals of the two sensors (31, 32) are processed (Figure 2).

6. Powered hand tool according to Claim 5, characterized in that, instead of the plane pass filter (33), a diaphragm having an aperture dependent on location is provided.

7. Powered hand tool according to any of Claims 1 to 4, characterized in that an optical component (40, 40', 40'') having zones permeable and impermeable to radiation, preferably an optical grid, is arranged between the radiation receiver (41, 41', 41'') and the second lens (24) (Figures 3 and 4).

8. Powered hand tool according to any of Claims 1 to 4, characterized in that the radiation receiver consists of a first (41') and a second (41'') radiation sensor having optical components (40', 40'') which are each arranged between the sensors (41', 41'') and the second lens (24) and have zones permeable and impermeable to radiation, preferably optical grids, the zones, permeable or impermeable to radiation, of the one grid (40') being arranged so as to have a stagger (46) relative to those of the other grid (40'') (Figure 4).

9. Powered hand tool according to either of Claims 7 or 8, characterized in that the dimensions of the zones, permeable or impermeable to radiation, of the optical components (40', 40'') are different at least in partial areas.

10. Powered hand tool according to any of Claims 1 to 4, characterized in that the radiation receiver (50) consists of a plurality of individual sensors which are preferably arranged in line form (Figure 5).

11. Powered hand tool according to any of Claims 1 to 4, characterized in that the radiation receiver (50) is a position-sensitive semiconductor photodiode (Figure 5).

12. Powered hand tool according to any of Claims 1 to 11, characterized in that a signal-processing arrangement (34) having an optical (62) and/or an acoustic (63) output device as well as an input device (64) is provided for the distance calculation.

13. Powered hand tool according to any of Claims 1 to 12, characterized in that the device for the distance measurement is arranged in the housing of the powered hand tool (13).

14. Powered hand tool according to any of Claims 1 to 12, characterized in that the device for the distance measurement is arranged in a removable handle of the powered hand tool (13).

15. Powered hand tool according to any of Claims 1 to 12, characterized in that the device for the distance measurement is arranged in a housing which can be flange-mounted on the powered hand tool (13).

FIG. 1

FIG. 2

FIG. 3

FIG. 4

## FIG. 5

## FIG. 6